# FASCICULE DE BREVET EUROPEEN

(11) **EP 0 967 504 B1**
(45) Date de publication et mention de la délivrance du brevet: **02.11.2005**
(21) Numéro de dépôt: 99401496.7
(22) Date de dépôt: 17.06.1999
(51) Int. Cl.: G02B 6/44, H02G 15/113, H02G 15/013

(54) **Croisement entre un joint rond et un joint plat**
Schnittfläche zwischen einer zylindrischen und einer flachen Dichtung
Interface between a cylindrical and a flat sealing

(30) Priorité: 23.06.1998 FR 9807905
(43) Date de publication de la demande: 29.12.1999
(73) Titulaire: CABLES PIRELLI, F-94410 Saint Maurice (FR)
(72) Inventeur: Liegeois, Christian, 91450 Soisy sur Seine (FR)
(74) Mandataire: Lhuillier, René

(56) Documents cités:
- EP-A- 0 695 900
- WO-A-96/19024
- FR-A- 2 758 400

## Description

La présente invention concerne les dispositifs d'étanchéité comportant plusieurs joints d'étanchéité de courbures différentes, qui doivent être accolés pour assurer la continuité de la surface externe d'une région que l'on souhaite protéger contre l'infiltration de liquides ou de poussières.

L'invention s'applique en particulier aux dispositifs de raccordement de câbles électriques ou optiques dans lesquels la zone de raccordement est protégée par une enceinte étanche que l'on peut, quand on veut modifier la façon dont des câbles sont raccordés, ouvrir et refermer ensuite.

Un tel dispositif de raccordement de câbles fait l'objet d'une demande de brevet déposée par la même demanderesse que pour la présente invention. Il comprend une boîte comportant au moins deux parties séparées par un joint d'étanchéité plat disposé sur le pourtour de la boîte mais interrompu aux endroits des ports d'entrée/sortie, chacun de ces ports étant matérialisé par des échancrures en regard sur lesdites parties de boîte et étant rempli par un joint de traversée. Ces joints de traversée enserrent chaque câble dans un manchon préférablement en élastomère et préférablement de forme essentiellement cylindrique, percé d'un certain nombre de trous de passage longitudinaux prévus pour un nombre égal de câbles utilisant le port d'entrée/sortie considéré. Aux fins d'étanchéité, le joint de traversée comprime les câbles radialement quand on referme la boîte.

Pour de tels dispositifs, on a constaté que des défauts d'étanchéité pouvaient se produire au niveau du croisement entre chaque joint de traversée rond et le joint périphérique plat.

Il a été proposé, pour résoudre ce problème, de munir le joint rond de rainures longitudinales, dans lesquelles viendraient s'insérer les bords du joint plat. Comme le joint rond est comprimé à la fermeture de la boîte de raccordement, on était en droit d'espérer que la compression du bord de joint plat dans la rainure assurerait une bonne étanchéité. On a constaté que ce n'était malheureusement pas le cas, des infiltrations se produisant au niveau des arêtes de la rainure.

Une autre solution connue consiste à former le joint rond et le joint plat en une seule pièce comme décrit dans le document EP0695900, ce qui n'est cependant pas pratique lorsqu'on veut modifier un câble ou un raccordement. Il est bien clair que le problème visé se présente non seulement dans le domaine technique des raccordements de câbles, mais de façon très générale dans toute réalisation technique requérant des joints d'étanchéité contigus de courbures différentes.

La solution apportée par la présente invention et définie dans la revendication 1 pour améliorer l'étanchéité assurée par lesdits joints consiste à reporter leur interface entièrement dans le plan du joint plat. Pour ce faire, de part et d'autre du joint rond au niveau du joint plat fait saillie une oreillette plane moulée d'une pièce avec le joint rond. Chacune de ces deux oreillettes s'imbrique dans une échancrure de forme complémentaire aménagée dans le joint plat, à la manière d'un puzzle. Les bords accolés étant ainsi entièrement situés dans le plan de joint, on a résolu grâce à la présente invention le problème de défaut d'étanchéité dû au croisement entre une surface ronde et une surface plane.

D'autres caractéristiques de l'invention ressortiront de la description qui va suivre de deux modes particuliers de réalisation de l'invention, ladite description s'appuyant sur les dessins annexés, dans lesquels :
- la figure 1 est une vue en plan de la partie inférieure d'une boîte de raccordement de câbles équipée de joints de traversée conformes à un premier mode de réalisation de l'invention,
- la figure 2 est une vue en perspective de l'un des joints de traversée de la figure 1,
- la figure 3 est une vue en plan d'un joint de traversée cylindrique conforme à un second mode de réalisation de l'invention, et
- la figure 4 est une vue en perspective du joint de traversée de la figure 3.

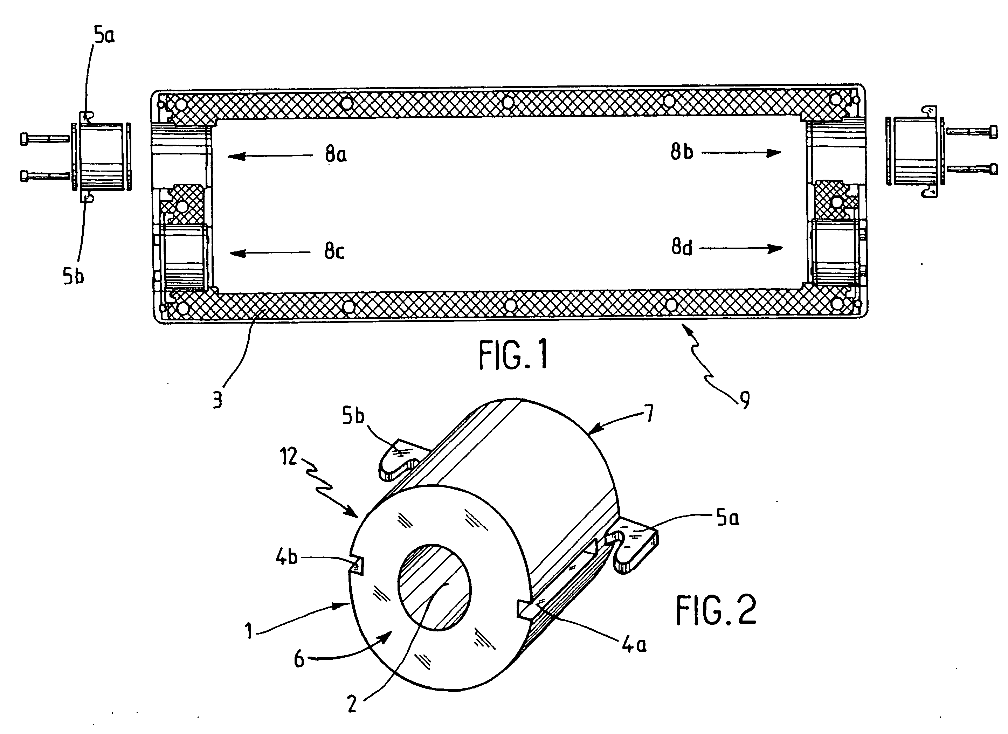

La figure 1 montre la partie inférieure 9 d'une boîte de raccordement munie de quatre (à titre d'exemple) ports d'entrée/sortie 8a, 8b, 8c et 8d, dont chacun est rempli par un joint de traversée. Deux de ces joints sont, sur cette figure, déjà logés dans leurs logements respectifs, tandis que les deux autres sont prêts à y prendre place. Un joint d'étanchéité plat 3 (indiqué par des hachures croisées) est disposé sur le pourtour de la boîte avec des interruptions aux endroits des ports d'entrée/sortie 8.

La figure 2 illustre, de façon schématique, un joint de traversée 12 constitué essentiellement d'un manchon cylindrique 1 définissant un passage longitudinal 2 pour les câbles (non représentés sur les figures). Il est prévu que le joint plat 3 s'insère dans deux rainures longitudinales diamétralement opposées 4a et 4b creusées sur la périphérie du manchon 1 à partir de sa face interne 6 (interne par rapport à la boîte de raccordement, et donc du point de vue de l'étanchéité). Enfin, le joint rond 12 comporte deux oreillettes planes 5a et 5b, moulées d'une pièce avec le manchon 1 et diamétralement opposées, qui font saillie au bord de la face externe 7 du manchon 1.

La figure 1 montre comment les oreillettes 5a et 5b s'insèrent dans des échancrures de forme complémentaire aménagées dans le joint plat 3, assurant ainsi une excellente étanchéité. Le problème mentionné dans l'introduction, concernant l'étanchéité au niveau des rainures, est résolu du fait que cet agencement permet d'interrompre les rainures avant qu'elles n'atteignent la face externe 7 du manchon 1. Les poussières ou liquides extérieurs sont donc privés de chemin leur permettant de s'introduire dans la boîte en passant par ces rainures.

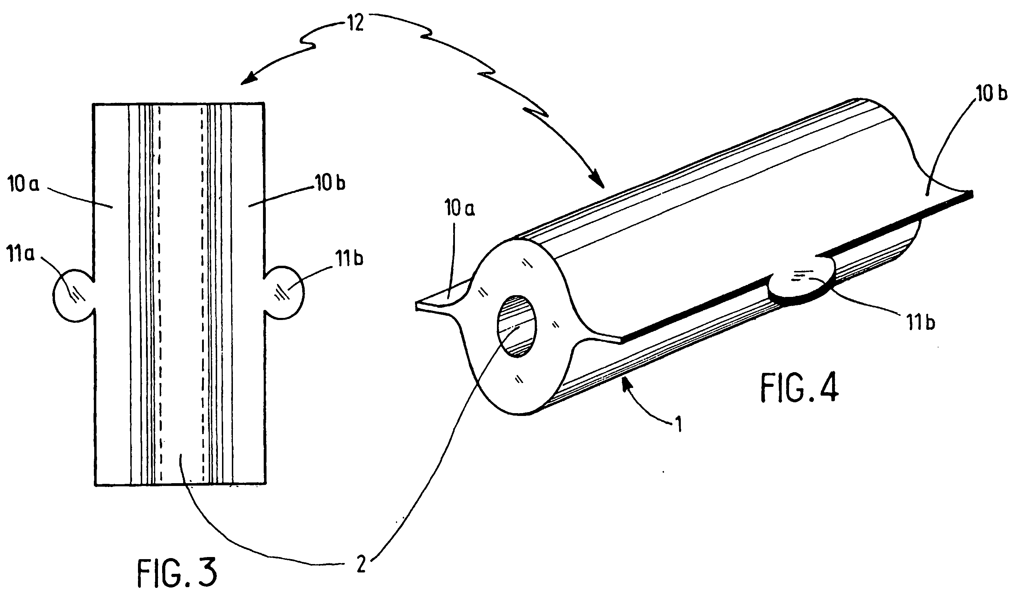

On peut même se passer complètement de rainures, comme le montrent les figures 3 et 4, qui illustrent une variante de réalisation de l'invention. Dans ce cas, les oreillettes planes 10a et 10b se prolongent sur toute la longueur du manchon 1 entre ses faces interne et externe. Chacune des deux oreillettes 10a (respectivement, 10b) porte sur son bord libre une ou plusieurs saillies 11a (respectivement, 11b) destinées à s'insérer dans des échancrures complémentaires du joint plat 3 (non représenté).

Il est bien clair que plusieurs caractéristiques du dispositif d'étanchéité décrit ci-dessus n'ont été fournies qu'à titre d'exemple, et ne sont pas essentielles s'agissant des idées principales de l'invention. En particulier, le joint non-plan peut présenter une surface externe arrondie quelconque, au lieu d'être cylindrique.

## Revendications

1. Dispositif d'étanchéité constitué d'un joint rond (12) présentant une surface externe latérale non-plane, une extrémité dite interne (6) et une extrémité dite externe (7) par rapport à la région dont on veut assurer l'étanchéité, et d'un joint plat (3) accolés de part et d'autre du joint rond sur une portion respective de ladite surface externe latérale **caractérisé en ce que** de part et d'autre du joint rond (12) et au niveau du joint plat (3) font saillie deux oreillettes planes (5a, 10a ; 5b, 10b) moulées d'une pièce avec le corps de joint (12), chacune de ces deux oreillettes (5a, 10a ; 5b, 10b) s'imbriquant dans une échancrure de forme complémentaire aménagée dans le joint plat (3), de manière à situer l'interface entre le joint rond (12) et le joint plat (3) entièrement dans le plan de ce dernier.

2. Dispositif d'étanchéité selon la revendication 1, **caractérisé en ce que**, d'une part, deux rainures longitudinales diamétralement opposées (4a ; 4b) sont creusées sur la périphérie externe du corps de joint rond (12), à partir de son extrémité interne (6), sans toutefois atteindre l'extrémité externe (7) du joint rond (12), ces rainures étant agencées de façon à ce que les bords du joint plat (3) puissent venir s'y insérer, et, d'autre part, **en ce que** les deux oreillettes planes (5a ; 5b) font saillie à partir de la face externe (7) du joint rond (12).

3. Dispositif d'étanchéité selon la revendication 1, **caractérisé en ce que** les deux oreillettes planes (10a ; 10b) se prolongent sur toute la longueur du joint rond (12) entre ses faces interne et externe, et **en ce que** chacune des deux oreillettes (10a) (resp.(10b)) porte sur son bord libre une ou plusieurs saillies (11a) (resp.(11b)) destinées à s'insérer dans des échancrures complémentaires du joint plat (3).

## Patentansprüche

1. Abdichtungsvorrichtung, gebildet durch eine Runddichtung (12) mit einer nicht-ebenen Außenseitenoberfläche, einem sogenannten inneren Ende (6) und einem sogenannten äußeren Ende (7), bezogen auf einen Bereich, dessen Abdichtung man sicherstellen will, sowie eine Dichtungsscheibe (3), auf beiden Seiten der Runddichtung eingefügt in jeweils ein Teilstück der genannten Außenseitenoberfläche,
**dadurch gekennzeichnet, dass** aus beiden Seiten der Runddichtung (12) in der Ebene der Dichtungsscheibe (3) flache Lappen (5a, 10a ; 5b, 10b) vorstehen, aus einem Stück gegossen mit dem Dichtungskörper (12), wobei jeder dieser beiden Lappen (5a, 10a ; 5b, 10b) sich so in eine in der Dichtungsscheibe (3) vorgesehene, komplementär geformte Aussparung einfügt, dass die Grenzfläche zwischen der Runddichtung (12) und der Dichtungsscheibe (3) sich ganz in der Ebene dieser letzteren befindet.

2. Abdichtungsvorrichtung nach Anspruch 1, **dadurch gekennzeichnet, dass** einerseits in dem Außenumfang des Runddichtungskörpers (12) zwei diametral entgegengesetzte Nuten (4a ; 4b) vorgesehen sind, ausgehend von seinem inneren Ende (6), ohne jedoch das äußere Ende (7) der Runddichtung (12) zu erreichen, wobei diese Nuten so konzipiert sind, dass die Ränder der Dichtungsscheibe (3) in sie eingefügt werden können, und dass andererseits die beiden flachen Lappen (5a ; 5b) ab der Außenfläche bzw. dem äußeren Ende (7) der Runddichtung (12) vorstehen.

3. Abdichtungsvorrichtung nach Anspruch 1, **dadurch gekennzeichnet, dass** die beiden flachen Lappen (10a ; 10b) sich über die gesamte Länge der Runddichtung (12) erstrecken, zwischen deren Innen- und Außenfläche bzw. deren innerem und äußerem Ende, und dadurch, dass jeder der beiden Lappen (10a) (resp. (10b)) an seinem freien Rand einen oder mehrere Ansätze (11a) (resp. (11b)) umfasst, bestimmt zur Einfügung in komplementäre Aussparungen der Dichtungsscheibe (3).

## Claims

1. A sealing device consisting of a round seal (12) exhibiting a non-planar lateral external surface, an end known as the internal end (6) and an end known as the external end (7) with respect to the region where sealing is to be ensured, and of a flat seal (3) pressed together on either side of the round seal over a respective portion of the said lateral external surface, **characterized in that**, on either side of the round seal (12) and at the region of the flat seal (3) there project two planar lugs (5a, 10a; 5b, 10b) moulded as an integral part of the seal body (12), each of these two lugs (5a, 10a; 5b, 10b) fitting into a cutout of complementary shape formed in the flat seal (3) so as to locate the interface between the round seal (12) and the flat seal (3) wholly in the plane of the latter.

2. A sealing device according to claim 1, **characterized in that**, on the one hand, two diametrically opposed longitudinal grooves (4a; 4b) are hollowed into the external periphery of the round seal body (12), from its internal end (6), without, however, reaching the external end (7) of the round seal (12), these grooves being arranged in such a way that the edges of the flat seal (3) can be inserted therein and, on the other hand, **in that** the two planar lugs (5a; 5b) project from the external face (7) of the round seal (12).

3. A sealing device according to claim 1, **characterized in that** the two planar lugs (10a; 10b) extend over the entire length of the round seal (12) between its internal and external faces, and **in that** each of the two lugs (10a) (or 10b respectively) bears, on its free edge, one or more projections (11a) (or 11b respectively) which are intended to be inserted in complementary cutouts of the flat seal (3).
